# EUROPÄISCHE PATENTSCHRIFT

(11) **EP 2 659 563 B1**
(45) Veröffentlichungstag und Bekanntmachung des Hinweises auf die Patenterteilung: **19.04.2017**
(21) Anmeldenummer: 11785648.4
(22) Anmeldetag: 15.11.2011
(51) Int. Cl.: H02J 3/18

(54) **VERFAHREN UND VORRICHTUNG ZUM BETREIBEN EINES ANTRIEBSSTRANGS EINES HYBRIDFAHRZEUGS**
METHOD AND DEVICE FOR OPERATING A DRIVE TRAIN OF A HYBRID VEHICLE
PROCÉDÉ ET DISPOSITIF PERMETTANT DE FAIRE FONCTIONNER UNE CHAÎNE CINÉMATIQUE D'UN VÉHICULE HYBRIDE

(30) Priorität: 30.12.2010 DE 102010064379
(43) Veröffentlichungstag der Anmeldung: 06.11.2013
(73) Patentinhaber: Robert Bosch GmbH, 70442 Stuttgart (DE)
(72) Erfinder: HEIDRICH, Torsten, 71665 Vaihingen/Enz (DE); RAICHLE, Daniel, 71735 Eberdingen-Nussdorf (DE); WIRTH, Martin, 74343 Sachsenheim (DE); WALD, Klaus-Juergen, 71263 Weil der Stadt (DE); STAVRIANOS, Dimitrios, 76227 Karlsruhe (DE); FANKHAUSER, Philip, 70437 Stuttgart (DE)
(86) Internationale Anmeldenummer: PCT/EP2011/070105
(87) Internationale Veröffentlichungsnummer: WO 2012/089396

(56) Entgegenhaltungen:
- EP-A2- 0 982 828
- DE-A1- 1 438 811
- DE-A1-102007 060 691

## Beschreibung

### Stand der Technik

Die Erfindung geht aus von einem Verfahren und einer Vorrichtung nach Gattung der unabhängigen Ansprüche. Ein Hybridfahrzeug mit einem Antriebsstrang, der zwei elektrische Maschinen aufweist, wobei beide zum Antrieb des Fahrzeuges an jeweils einer Antriebsachse, die mechanisch nicht miteinander gekoppelt sind dienen, ist als Fahrzeug RX450h der Marke Lexus bekannt. Die elektrischen Verbraucher des Fahrzeugs sind über ein Bordnetz mit Energiequellen verbunden. Fahrzeuge mit einem elektrischen Fahrantrieb weisen ein elektrisches Hochspannungsbordnetz zur Versorgung des elektrischen Antriebs und weiterer Hochspannungsverbraucher auf. Das Hochspannungsbordnetz ist mit einem Niederspannungsbordnetz verbunden, welches der Versorgung der Niederspannungsverbraucher des Fahrzeugs dient.

Es ist bekannt, eine der elektrischen Maschinen eines Hybridfahrzeuges zeitweise generatorisch zu betreiben, um elektrische Energie zur Versorgung der Verbraucher sowie zum Laden der Energiespeicher zu erzeugen. Beim Zuschalten von leistungsstarken Verbrauchern, z.B. eine elektrisch betriebene Fahrzeugklimatisierung, entstehen einerseits elektrische Leistungsspitzen und damit Spannungseinbrüche im Bordnetz des Fahrzeugs, andererseits bricht die Drehzahl des Antriebsstrangs und der generatorisch betriebenen elektrischen Maschine ein, da der Verbrennungsmotor nicht in kürzester Zeit ein hierzu notwendiges deutlich erhöhtes Drehmoment abgibt. Beim Abschalten der Verbraucher treten entsprechend Spannungsspitzen und Drehzahlüberschwinger im Antriebsstrang auf.

Zur Reduzierung dieser elektrischen Belastung des Bordnetzes sowie der unerwünschten Drehzahlschwankungen im Antriebsstrang während des Betriebes des Hybridfahrzeuges sind unterschiedliche Maßnahmen zur Spannungsstabilisierung, z.B. eine Energiepufferung im Bordnetz mittels Kondensatoren, bekannt.

Aus der EP 0 982 828 A2 ist ein Verfahren und eine Vorrichtung zur Blindleistungskompensation in Bordnetzen bekannt, wobei elektrische Motoren als Blindleistungsgeneratoren für das Bordnetz verwendet werden. Aus der DE 14 38 811 A1 ist eine Anordnung zum wärmekraftelektrischen Fahrzeugantrieb bekannt, wobei zur Erregung eines Asynchrongenerators eine parallel geschaltete Blindleistungsmaschine verwendet wird. Ferner ist aus der DE 10 2007 060 691 A1 eine Fahrzeug-Energieversorgungsvorrichtung eines Zweispannungstyps bekannt, bei der vorgesehen ist, jeweils eine Energieerzeugungssteuerung für jede der zwei Energieversorgungssysteme einzeln durchzuführen.

### Offenbarung der Erfindung

Das erfindungsgemäße Verfahren zum Betreiben eines Antriebsstrangs eines Hybridfahrzeuges umfasst die Merkmale des Anspruchs 1 und geht von einem Hybridfahrzeug mit einem Bordnetz aus, wobei an dieses Bordnetz eine elektrische Maschine angeschlossen ist. Die erste elektrische Maschine kann an einen Antriebsstrang des Fahrzeuges und damit an ein Fahrzeugantriebsrad angekoppelt, bzw. davon abgekoppelt werden. Beispielsweise dient die erste elektrische Maschine dem Antrieb einer Fahrzeugachse. Erfindungsgemäß ist weiter eine Batterie, insbesondere Hochvoltbatterie, vorgesehen, die mit dem Bordnetz verbindbar ist und in einem Hochvoltnormalbetrieb zur Spannungsstabilisierung des Bordnetzes eingesetzt wird und in einem Ersatzbetrieb, wenn die Batterie das Bordnetz nicht mit einer vorgegebenen Energie versorgt, ist vorgesehen, die erste elektrische Maschine abgekoppelt von einem Fahrzeugantriebsrad des Hybridfahrzeuges zur Spannungsstabilisierung des Bordnetzes zu betreiben.

Die erfindungsgemäße Vorrichtung zum Betreiben eines Antriebsstrangs eines Hybridfahrzeuges umfasst die Merkmale des Anspruchs 12 und geht von einem Hybridfahrzeug mit einem Bordnetz aus, wobei an dieses Bordnetz eine elektrische Maschine angeschlossen ist. Die erste elektrische Maschine kann an einen Antriebsstrang des Fahrzeuges und damit an ein Fahrzeugantriebsrad angekoppelt, bzw. davon abgekoppelt werden.

Beispielsweise dient die erste elektrische Maschine dem Antrieb einer Fahrzeugachse. Erfindungsgemäß ist eine Batterie, insbesondere Hochvoltbatterie, vorgesehen, die mit dem Bordnetz verbindbar ist und in einem Hochvoltnormalbetrieb zur Spannungsstabilisierung des Bordnetzes eingesetzt wird und in einem Ersatzbetrieb, wenn die Batterie das Bordnetz nicht mit einer vorgegebenen Energie versorgt, sind Mittel vorgesehen, die die Abkopplung der ersten elektrischen Maschine von einem Fahrzeugantriebsrad des Hybridfahrzeuges ansteuern und diese zur Spannungsstabilisierung des Bordnetzes betreiben.

Ein technisches Ausführungsbeispiel dieses Verfahrens und der dazugehörigen Vorrichtung ist, dass die erste elektrische Maschine speziell für den Betrieb zur Spannungsstabilisierung von einer Antriebsachse abgekoppelt wird und nicht für den Antrieb des Fahrzeuges verwendet wird. Normalerweise erfolgt die Spannungsstabilisierung mittels einer Batterie, die an das Bordnetz angeschlossen ist. Z. B. kann ein Ausfall der Batterie, z.B. aufgrund eines Defektes, oder eine Abkopplung dieser Batterie vom Bordnetz dazu führen, dass die Batterie das Bordnetz nicht mehr mit einer vorgegebenen Energie versorgt. In diesem Fall kann die Batterie auch nicht mehr zur Spannungsstabilisierung dienen. In diesem Fall wird erfindungsgemäß die erste elektrische Maschine von den Antriebsrädern abgekoppelt und wie oben erläutert zur Spannungsstabilisierung betrieben. Vorteilhaft wird somit die Spannungsstabilität des Bordnetzes erhöht. Dies ist insbesondere bei Ausfall etwaiger anderer Komponenten, die zur Spannungsstabilität dienen, notwendig.

Weitere Vorteile werden durch die in den Unteransprüchen angegebenen Maßnahmen erzielt.

In einer Weiterbildung der Erfindung ist vorgesehen, dass die erste elektrische Maschine zur Spannungsstabilisierung des Bordnetzes derart betrieben wird,-diese im Normalbetrieb mit einer vorgegebenen Freilaufdrehzahl betrieben wird und dass diese im Kompensationsbetrieb generatorisch betrieben wird, wenn die Bordnetzspannung einen vorgegebenen Bordnetzspannungswert unterschreitet. Ein technisches Ausführungsbeispiel hierzu ist, dass in der ersten elektrischen Maschine zur Spannungsstabilisierung im Normalbetrieb mittels des Betriebes bei einer vorgegebenen Freilaufdrehzahl kinetische Energie vorgehalten wird. Bei einem Spannungsabfall im Bordnetz, beispielsweise durch Zuschalten einer elektrischen Last verursacht, wird die elektrische Maschine generatorisch betrieben und dabei abgebremst. Dabei wird die vorgehaltene kinetische Energie in elektrische Energie umgewandelt und somit vorteilhaft einem Spannungseinbruch entgegengewirkt.

In einer Weiterbildung der Erfindung ist vorgesehen, dass die erste elektrische Maschine zur Spannungsstabilisierung des Bordnetzes derart betrieben wird, dass diese im Normalbetrieb mit einer vorgegebenen Freilaufdrehzahl betrieben wird und dass diese im Kompensationsbetrieb motorisch betrieben wird, wenn die Bordnetzspannung einen vorgegebenen Bordnetzspannungswert überschreitet.
Ein technisches Ausführungsbeispiel hierzu ist, dass in der ersten elektrischen Maschine zur Spannungsstabilisierung im Normalbetrieb mittels des Betriebes bei einer vorgegebenen Freilaufdrehzahl kinetische Energie vorgehalten wird.
Bei einem Spannungsanstieg im Bordnetz, beispielsweise durch Abschalten einer elektrischen Last verursacht, wird die elektrische Maschine motorisch betrieben und dabei beschleunigt. Dabei nimmt die elektrische Maschine die überschüssige elektrische Energie aus dem Bordnetz auf und wandelt diese in kinetische Energie um. Somit wird vorteilhaft einem weiteren Spannungsanstieg entgegengewirkt.

In einer weiteren Weiterbildung der Erfindung ist vorgesehen, dass die erste elektrische Maschine zur Spannungsstabilisierung des Bordnetzes derart betrieben wird, dass im Kompensationsbetrieb die generatorische Leistung so eingestellt wird, dass ein erster unterer Spannungsgrenzwert der Spannung des Bordnetzes nicht unterschritten wird und/ oder dass im Kompensationsbetrieb die motorische Leistung so eingestellt wird, dass ein erster oberer Spannungsgrenzwert der Spannung des Bordnetzes nicht überschritten wird. Ein technisches Ausführungsbeispiel hierzu ist, dass die Spannung des Bordnetzes überwacht wird und in Abhängigkeit der Spannung des Bordnetzes die generatorische und/ oder motorische Leistung so eingestellt wird, dass erste obere oder untere Spannungsgrenzwerte nicht überschritten werden. Vorteilhaft werden so Überlastungen des elektrischen Bordnetzes vermieden.

In einer weiteren Weiterbildung der Erfindung ist vorgesehen, dass der ersten elektrischen Maschine die Freilaufsolldrehzahl in Abhängigkeit einer zu erwartenden Leistungsänderung des Bordnetzes vorgegeben wird. Ein technisches Ausführungsbeispiel hierzu ist, dass in Abhängigkeit des größten zuschaltbaren Verbrauchers oder der noch gleichzeitig zuschaltbaren Verbraucher die Freilaufdrehzahl vorgegeben wird. Somit wird die Energiemenge eingestellt, die kinetisch mittels der elektrischen Maschine zum Ausgleich der Spannungseinbrüche vorgehalten wird. Vorteilhaft wird somit der Normalbetrieb der ersten elektrischen Maschine zur Spannungsstabilisierung auf den Bedarfsfall angepasst eingestellt. Ein energieintensiver Betrieb bei einer besonders hohen Freilaufdrehzahl wird dadurch vermieden. Für den Fall, dass sämtliche Verbraucher zugeschaltet sind, kann die Freilaufdrehzahl bis zum Stillstand abgesenkt werden, da ein Spannungseinbruch aufgrund eines Zuschaltens eines Verbrauchers nicht zu erwarten ist.

In einer weiteren Weiterbildung der Erfindung ist vorgesehen, dass die erste elektrische Maschine zur Spannungsstabilisierung des Bordnetzes derart betrieben wird, dass diese im Normalbetrieb als Lastwiderstand mit einem vorgegebenen Normalbetriebslastwiderstandswert betrieben wird. Hierzu wird beispielsweise zeitweise eine Phase der ersten elektrischen Maschine an das Bordnetz angeschlossen, beispielsweise durch entsprechende Schalterstellungen des Wechselrichters. Über die Dauer dieser Zuschaltung, die über die Ansteuerung des Wechselrichters variierbar ist, kann der wirkende Normalbetriebslastwiderstandswert eingestellt und vorgegeben werden. Zusätzlich wird im Kompensationsbetrieb der wirksame Lastwiderstandswert der ersten elektrischen Maschine erhöht, wenn die Bordnetzspannung einen vorgegebenen Bordnetzspannungswert unterschreitet und/oder im Kompensationsbetrieb der wirksame Lastwiderstandswert der ersten elektrischen Maschine reduziert, wenn die Bordnetzspannung einen vorgegebenen Bordnetzspannungswert (UBvor) überschreitet. Über die Dauer des Anschließens der z.B. einen Phase der ersten elektrischen Maschine an das Bordnetz, die über die Ansteuerung des Wechselrichters variierbar ist, wird der wirkende Lastwiderstandswert eingestellt. Wird die Dauer der Zuschaltung erhöht, verringert sich der wirksame Lastwiderstandswert. Wird die Dauer der Zuschaltung reduziert, erhöht sich der wirksame Lastwiderstandswert. Ein technisches Ausführungsbeispiel hierzu ist der zeitweise Anschluss z.B. mindestens einer Phase der ersten elektrischen Maschine an das Bordnetz, so dass die erste elektrische Maschine wie eine elektrische Impedanz im Bordnetz wirkt. Somit wirkt die erste elektrische Maschine selbst wie ein elektrischer Verbraucher des Bordnetzes. Bei einem Spannungsabfall im Bordnetz, beispielsweise durch Zuschalten eines weiteren elektrischen Verbrauchers verursacht, wird die Dauer des zeitweisen Anschlusses der Phase der ersten elektrischen Maschine vom Bordnetz verringert. Dabei wird das Bordnetz entlastet und somit vorteilhaft einem Spannungseinbruch entgegengewirkt. Bei einem Spannungsanstieg im Bordnetz, beispielsweise durch Abschalten eines weiteren elektrischen Verbrauchers verursacht, wird die Dauer des zeitweisen Anschlusses der Phase der ersten elektrischen Maschine an das Bordnetz erhöht. Dabei belastet die elektrische Maschine das Bordnetz zusätzlich. Somit wird vorteilhaft einem weiteren Spannungsanstieg entgegengewirkt.

In einer weiteren Weiterbildung der Erfindung ist vorgesehen, dass der Normalbetriebslastwiderstandswert der ersten elektrischen Maschine in Abhängigkeit einer zu erwartenden Leistungsänderung des Bordnetzes vorgegeben wird. Ein technisches Ausführungsbeispiel hierzu ist, dass in Abhängigkeit des größten zuschaltbaren Verbrauchers oder der noch gleichzeitig zuschaltbaren Verbrauchern der Normalbetriebslastwiderstandswert vorgegeben wird. Somit wird die Leistung eingestellt, die mittels der elektrischen Maschine zum Ausgleich der Spannungseinbrüche vorgehalten wird. Vorteilhaft wird somit der Normalbetriebslastwiderstandswert der ersten elektrischen Maschine zur Spannungsstabilisierung auf den Bedarfsfall angepasst eingestellt. Ein energieintensiver Betrieb mit einem besonders hohen Normalbetriebslastwiderstandswert wird dadurch vermieden. Für den Fall, dass sämtliche Verbraucher zugeschaltet sind, kann der Normalbetriebslastwiderstandswert durch Abkoppeln vom Bordnetz vollständig aufgehoben werden, da ein Spannungseinbruch aufgrund eines Zuschaltens eines Verbrauchers nicht zu erwarten ist.

In einer weiteren Weiterbildung der Erfindung ist vorgesehen, dass der Antriebsstrang weiter einen Verbrennungsmotor und eine zweite elektrische Maschine aufweist, und die zweite elektrische Maschine an dem Bordnetz angeschlossen ist, wobei der Verbrennungsmotor die zweite elektrische Maschine antreibt, damit diese generatorisch elektrische Leistung zur Versorgung des Bordnetzes erzeugt. Ein technisches Ausführungsbeispiel hierzu ist, dass an dem Antriebsstrang zwei nicht mechanisch miteinander verbundene elektrische Maschinen angeschlossen sind. Die zweite elektrische Maschine ist mit einem Verbrennungsmotor koppelbar. Zur Erzeugung elektrischer Energie zur vorteilhaften Versorgung des Bordnetzes wird die zweite elektrische Maschine generatorisch betrieben und vom Verbrennungsmotor angetrieben.

In einer weiteren Weiterbildung der Erfindung ist vorgesehen, dass in einem Betriebsmodus A zunächst die zweite elektrische Maschine zur Spannungsstabilisierung des Bordnetzes, insbesondere in einem Spannungsregelmodus, eingesetzt wird und erst wenn die Bordnetzspannung einen zweiten unteren Spannungsgrenzwert unterschreitet oder einen zweiten oberen Spannungsgrenzwert überschreitet in einem Betriebsmodus B die erste elektrische Maschine zur Spannungsstabilisierung des Bordnetzes betrieben wird. Ein technisches Ausführungsbeispiel hierzu ist, dass die erste elektrische Maschine erst dann zur Spannungsstabilisierung verwendet wird, wenn die Bordnetzspannung außerhalb eines Bereiches liegt, innerhalb dessen die üblichen Maßnahmen zur Spannungsstabilisierung ausreichen. Dieser Bereich spannt sich zwischen dem zweiten oberen und dem zweiten unteren Spannungsgrenzwert auf. Vorteilhaft wird die erste elektrische Maschine dadurch seltener vom Fahrzeugantriebsrad abgekoppelt. Somit ergibt sich eine höhere Verfügbarkeit des elektrischen Antriebes, der von der ersten elektrischen Maschine angetrieben wird.

In einer weiteren Weiterbildung der Erfindung ist vorgesehen, dass in einem Betriebsmodus C die zweite elektrische Maschine zur Spannungsstabilisierung von Spannungsänderungen des Bordnetzes eingesetzt wird, wobei diese Spannungsänderungen des Bordnetzes eine Frequenz aufweisen, die einen ersten vorgegebenen Frequenzgrenzwert unterschreiten und die erste elektrische Maschine zur Spannungsstabilisierung von Spannungsänderungen des Bordnetzes eingesetzt wird, wobei diese Spannungsänderungen des Bordnetzes eine Frequenz aufweisen, die einen zweiten vorgegebenen Frequenzgrenzwert überschreiten. Insbesondere kann der Wert des ersten und des zweiten Frequenzgrenzwertes übereinstimmen. Ein technisches Ausführungsbeispiel hierzu ist ein Fahrzeug mit zwei elektrischen Maschinen, wobei sich die beiden elektrischen Maschinen z.B. aufgrund ihrer Bauart und ihrer Anbindung im Antriebsstrang unterschiedlich schnell regeln lassen. Die Veränderung des Arbeitspunktes (z.B. Drehzahl, Drehmoment) der zweiten elektrischen Maschine, die mit dem Verbrennungsmotor gekoppelt ist, ist träge im Vergleich zur Veränderung der freilaufenden ersten elektrischen Maschine. Schnellere, hochfrequentere Spannungsänderungen werden daher mittels der ersten elektrischen Maschine ausgeglichen und langsamere, niederfrequentere Spannungsänderungen werden mittels der zweiten elektrischen Maschine im Sinne der Spannungsstabilisierung kompensiert. Vorteilhaft wird so die Spannungsstabilisierung optimiert.

In einer weiteren Weiterbildung der Erfindung ist vorgesehen, dass ein DC/DC Wandler vorgesehen ist, der zur Kopplung des Bordnetzes mit einem Zweitspannungsbordnetz dient, wobei das Zweitspannungsbordnetz bei einer anderen Spannung betrieben wird als das Bordnetz, insbesondere bei einer niedrigeren Spannung als das Bordnetz, und wobei das Zweitspannungsbordnetz mittels des DC/DC Wandlers mit Energie aus dem Bordnetz versorgt wird. Ein technisches Ausführungsbeispiel ist die Ausrüstung eines Hybridfahrzeuges mit einem Bordnetz mit einer höheren Bordnetzspannung (Traktionsbordnetz, Hochspannungsbordnetz) und ein Zweitspannungsbordnetz mit einer niedrigeren Bordnetzspannung (12-Volt-Bordnetz) aufweist, wobei das Zweitspannungsbordnetz mittels eines DC/DC-Wandlers an das Bordnetz angeschlossen ist. Vorteilhaft wird bei diesem Ausführungsbeispiel durch Nutzung der ersten elektrischen Maschine zur Spannungsstabilisierung ein spannungsstabiler Betrieb der beiden Bordnetze möglich, insbesondere auch bei Ausfall der Hochvoltbatterie.

Das dargestellte Verfahren und die Vorrichtung können bei Hybridfahrzeugen eingesetzt werden.

### Kurze Beschreibung der Zeichnungen

Die Erfindung lässt zahlreiche Ausführungsformen zu. Einige davon werden anhand der den Zeichnungen dargestellten Figuren näher erläutert.

Es zeigt:
Figur 1: Prinzipdarstellung eines Fahrzeugantriebsstrangs eines Fahrzeuges mit Hybridantrieb
Figur 2: schematisches Ablaufdiagramm eines Ausführungsbeispiels des erfindungsgemäßen Verfahrens
Figur 3: Diagramm mit Spannungsverläufen im Bordnetz
Figur 4: Diagramm zum Verfahren zur Spannungsstabilisierung
Figur 5: Diagramm zu unterschiedlichen Betriebsmodi der Spannungsstabilisierung
Figur 6: Regelungsstruktur eines Ausführungsbeispiels mit Berücksichtigung unterschiedlicher Frequenzen bei der Spannungsstabilisierung

### Ausführungsformen der Erfindung:

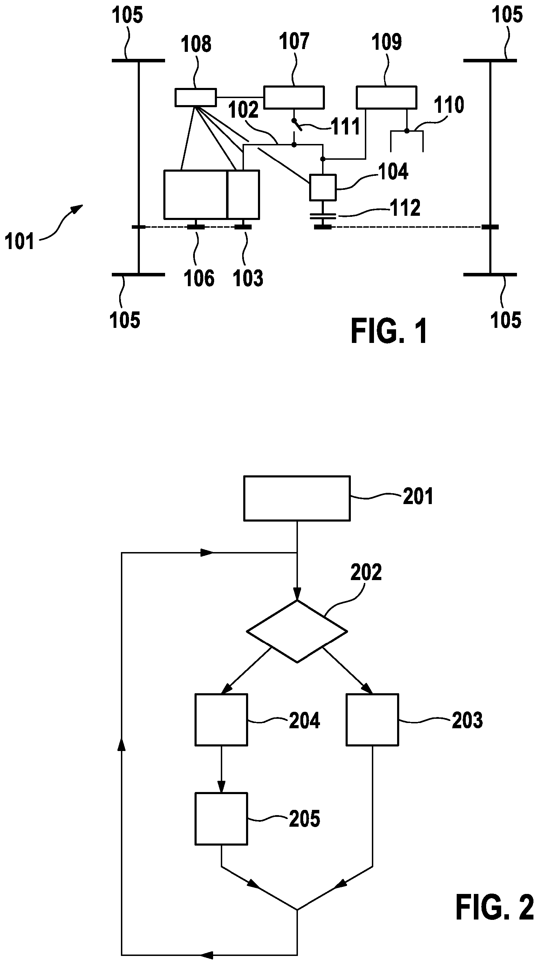

Figur 1 zeigt eine Prinzipdarstellung eines Fahrzeugantriebsstrangs 101 eines Fahrzeuges mit einem Hybridantrieb. An dem Bordnetz 102 sind die zweite elektrische Maschine 103 und die erste elektrische Maschine 104 sowie ein DC/DC-Wandler 109 angeschlossen. An dem DC/DC-Wandler 109 ist der Anschluss eines Niederspannungsbordnetzes 110 angedeutet, an dem weitere (nicht dargestellte) zu und abschaltbare Verbraucher angeschlossen sind. Weiter sind an dem Hochvoltbordnetz eine Hochvoltbatterie 107 sowie Mittel, z.B. ein Steuergerät 108, zur Ansteuerung der Komponenten (102, 103, 104, 106, 107) angeschlossen. Das Steuergerät 108 könnte je nach elektrischer Ausführung auch am Niederspannungsbordnetz 110 angeschlossen sein. Mechanisch ist die zweite elektrische Maschine 103 mit dem Verbrennungsmotor 106 koppelbar, damit dieser die zweite elektrische Maschine 103 antreiben kann. Dabei erzeugt die zweite elektrische Maschine 103 generatorisch elektrische Energie zur Versorgung des Hochspannungsbordnetzes 102. Die Hochvoltbatterie 107 kann mittels eines Schalters 111 vom Bordnetz abgekoppelt werden. Die erste elektrische Maschine 104 ist über eine Kupplung 112 zum Antrieb des Fahrzeuges mit der Hinterachse mit den Fahrantriebsrädern 105 koppelbar.

Figur 2 zeigt ein schematisches Ablaufdiagramm eines Ausführungsbeispiels des erfindungsgemäßen Verfahrens. In einem ersten Schritt 201 startet das Verfahren. In einem zweiten Schritt 202 wird überprüft, ob ein besonderer Betrieb des Antriebstrangs zur Spannungsstabilisierung des Hochvoltnetzes notwendig ist. Beispielsweise wird hierzu die Bordnetzspannung UBist gemessen und überprüft, ob diese von dem vorgegebenen Bordnetzspannungswert UBvor abweicht oder vorgegebene Grenzwerte, z.B. zweiter unterer bzw. oberer Spannungsgrenzwert (U2U, U2O), unter- oder überschritten werden. Andererseits kann auch ein Ausfall oder ein Abschalten der Hochvoltbatterie als Auslöser dafür dienen, den besonderen Betrieb zur Spannungsstabilisierung anzustoßen. Falls der besondere Betrieb zur Spannungsstabilisierung nicht notwendig ist, verzweigt das Verfahren zu einem dritten Schritt 203 und der Betrieb wird wie üblich fortgeführt. Anschließend verzeigt das Verfahren wieder zum zweiten Schritt 202 zur erneuten Überprüfung der Notwendigkeit des Spannungsstabilisierungsbetriebes. Falls der Betrieb zur Spannungsstabilisierung notwendig ist, so verzweigt das Verfahren zu einem vierten Schritt 204, in dem die erste elektrische Maschine 104 von den Antriebsrädern 105 abgekoppelt wird. Im folgenden fünften Schritt 205 wird die erste elektrische Maschine 104 zur Spannungsstabilisierung verwendet. Hierzu wird sie entweder bei einer vorgegebenen Freilaufsolldrehzahl N F betrieben oder als Lastwiderstand mit Normalbetriebslastwiderstandswert RN betrieben. Bei Spannungsschwankungen der Bordnetzspannung U Bist wird über Ansteuerung zum generatorischen oder motorischen Betrieb, bzw. durch Vergrößern oder Verkleinern der Impedanz der ersten elektrischen Maschine 104 den Spannungsschwankungen entgegengewirkt. Anschließend springt das Verfahren zurück zum zweiten Schritt 202, in dem wiederum die Notwendigkeit des besonderen Betriebs zur Spannungsstabilisierung überprüft wird.

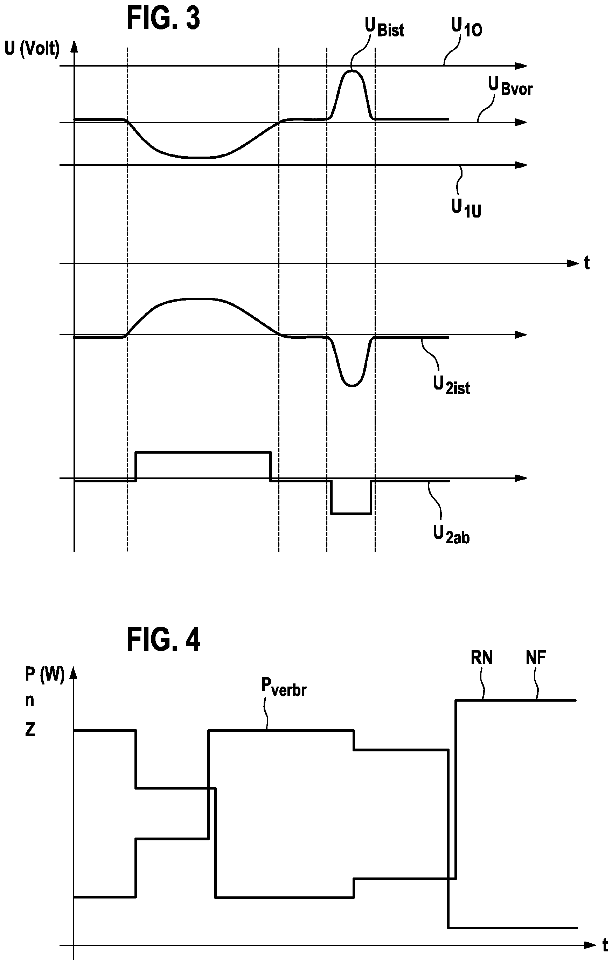

Figur 3 zeigt ein Diagramm, auf dem ein vorgegebener Bordnetzspannungswert Ubvor sowie ein erster unterer und ein erster oberer Spannungsgrenzwert (U1U, U1O) über der Zeit t dargestellt sind. Weiter ist die tatsächliche Bordnetzspannung UBist aufgetragen. Ebenfalls in dem Diagramm ist auch der Verlauf der Spannung U2ist der ersten elektrischen Maschine 104 beim Betrieb zur Spannungsstabilisierung aufgetragen. Die Spannung U2ist wird durch den generatorischen bzw. motorischen Betrieb zum Ausgleich der Spannungsschwankung von UBist erzeugt. Zusätzlich ist der Spannungsabfall U2ab an der ersten elektrischen Maschine 104 dargestellt, der dann auftritt, wenn beim Betrieb zur Spannungsstabilisierung die Impedanz der ersten elektrischen Maschine 104 zum Ausgleich der Spannungsschwankung von UBist genutzt wird.

Figur 4 zeigt ein Diagramm, bei dem ein Beispiel für eine Abhängigkeit der vorgegebenen Freilaufdrehzahl NF als auch des Normalbetriebslastwiderstandswert RN von der zu erwartenden Leistungsänderung Pverbr über der Zeit t dargestellt ist. Entsprechend ist die Y-Achse des Diagramms für die darzustellende Leistung mit einem P, für die Drehzahl mit einem n und für die Impedanz mit einem Z beschriftet. Die zu erwartende Leistungsänderung Pverbr ist dabei als Leistung der aktuell angeschlossenen Verbraucher aufgetragen. Wenn die Leistung der aktuell angeschlossenen Verbraucher relativ hoch ist, besteht eine relativ geringe zu erwartende Leistungssteigerung, jedoch eine relativ große zu erwartende Leistungsminderung und umgekehrt. Entsprechend wird bei einer geringen zu erwartenden Leistungssteigerung mittels einer geringen positiven vorgegebenen Freilaufdrehzahl NF der ersten elektrischen Maschine 104 eine geringe kinetische Energie zur Spannungsstabilisierung vorgehalten und umgekehrt. Ebenso wird bei einer geringen zu erwartenden Leistungssteigerung mittels eines geringen Normalbetriebslastwiderstandswert RN ein geringer Spannungsabfall zur Spannungsstabilisierung vorgehalten und umgekehrt, wenn zur Spannungsstabilisierung die Impedanz der ersten elektrischen Maschine genutzt wird.

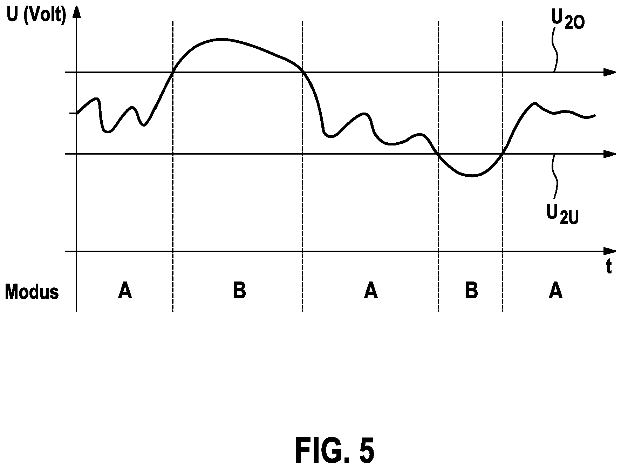

Figur 5 zeigt ein Diagramm, bei dem die unterschiedlichen Betriebsmodi A und B über der Zeit t aufgetragen sind. In Abhängigkeit der Bordnetzspannung UBist wird Betriebsmodus A oder B eingesetzt. Unterschreitet die Bordnetzspannung UBist eine zweite untere Spannungsgrenze U2U oder Überschreitet die Bordnetzspannung UBist eine zweite obere Spannungsgrenze U2O, so wird Betriebsmodus B aktiviert, bei dem die erste elektrische Maschine 104 zur Spannungsstabilisierung verwendet wird.

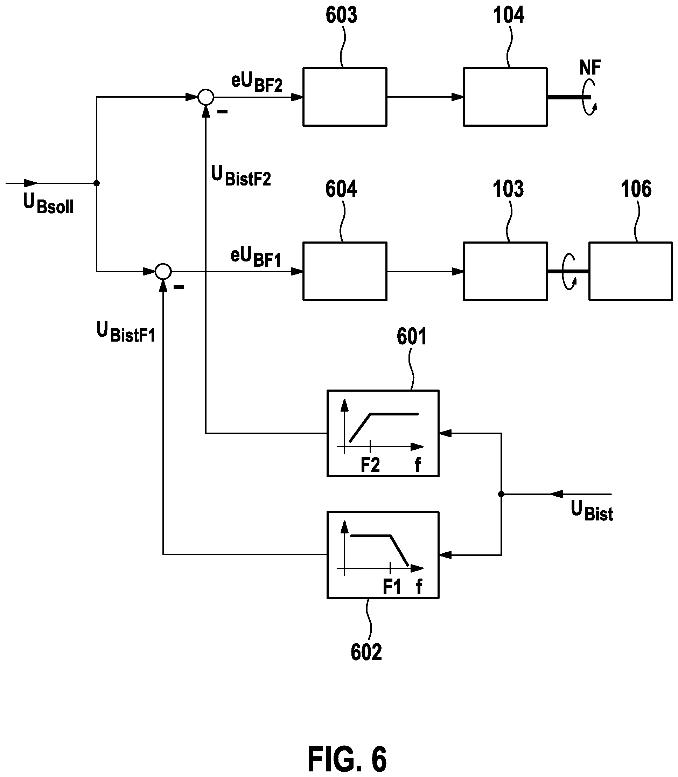

In Figur 6 ist eine Reglerstruktur eines Ausführungsbeispiels dargestellt, bei dem die zweite elektrische Maschine (103) zur Spannungsstabilisierung von Spannungsänderungen des Bordnetzes eingesetzt wird, wobei diese Spannungsänderungen des Bordnetzes eine Frequenz aufweisen, die einen ersten vorgegebenen Frequenzgrenzwert (F1) unterschreiten und die erste elektrische Maschine (104) zur Spannungsstabilisierung von Spannungsänderungen des Bordnetzes eingesetzt wird, wobei diese Spannungsänderungen des Bordnetzes eine Frequenz aufweisen, die einen zweiten vorgegebenen Frequenzgrenzwert (F2) überschreiten. Die Regelgröße (Ubist) wird über zwei Frequenzfilter (601, 602) in zwei Regelgrößen aufgesplittert. Die erste Regelgröße (UbistF2) weist Frequenzen oberhalb der Frequenz F2 auf. Die zweite Regelgröße (UbistF1) weist Frequenzen unterhalb der Frequenz F1 auf. Die jeweiligen Regelgrößen werden mit der Führungsgröße (UBSoll), dem Sollwert der Bordnetzspannung, verglichen. Die sich ergebenden jeweiligen Regelabweichungen (eUBF2, eUBF1) werden einzelnen Reglern (603, 604) zugeführt. Der erste Regler (603) steuert in Abhängigkeit der Regelabweichung (eUBF2) die erste elektrische Maschine (104). Insbesondere wird dabei die Drehzahl der ersten elektrischen Maschine beeinflusst. Der zweite Regler (604) steuert in Abhängigkeit der Regelabweichung (eUBF1) die zweite elektrische Maschine (103). Insbesondere wird dabei das Drehmoment der zweiten elektrischen Maschine beeinflusst. Insbesondere kann der Wert des ersten und des zweiten Frequenzgrenzwertes (F1, F2) übereinstimmen. Die Veränderung des Arbeitspunktes (z.B. Drehzahl, Drehmoment) der zweiten elektrischen Maschine (103), die mit dem Verbrennungsmotor (106) gekoppelt ist, ist träge im Vergleich zur Veränderung der freilaufenden ersten elektrischen Maschine (104). Schnellere, hochfrequentere Spannungsänderungen werden daher mittels der ersten elektrischen Maschine (104) ausgeglichen und langsamere, niederfrequentere Spannungsänderungen werden mittels der zweiten elektrischen Maschine (103) im Sinne der Spannungsstabilisierung kompensiert.

## Patentansprüche

1. Verfahren zum Betreiben eines Antriebsstrangs (101) eines Hybridfahrzeuges mit einem Bordnetz (102), wobei der Antriebsstrang (101) mindestens ein Fahrzeugantriebsrad (105) sowie eine erste elektrische Maschine (104) zum Antreiben des mindestens einen Fahrzeugantriebsrades aufweist, und die erste elektrische Maschine (104) an dem Bordnetz (102) angeschlossen ist, **dadurch gekennzeichnet, dass** eine Batterie (107) vorgesehen ist, die mit dem Bordnetz (102) verbindbar ist und in einem Hochvoltnormalbetrieb zur Spannungsstabilisierung des Bordnetzes (102) eingesetzt wird und in einem Ersatzbetrieb, wenn die Batterie (107) das Bordnetz (102) nicht mit einer vorgegebenen Energie versorgt, zur Spannungsstabilisierung des Bordnetzes (102) die erste elektrische Maschine (104) abgekoppelt von dem mindestens einen Fahrzeugsantriebsrad (105) des Hybridfahrzeuges betrieben wird.

2. Verfahren nach Anspruch 1 **dadurch gekennzeichnet, dass**
die erste elektrische Maschine (104) zur Spannungsstabilisierung des Bordnetzes (102) derart betrieben wird,
dass diese im Normalbetrieb mit einer vorgegebenen Freilaufdrehzahl (NF) betrieben wird
und dass diese im Kompensationsbetrieb generatorisch betrieben wird, wenn die Bordnetzspannung (Ubist) einen vorgegebenen Bordnetzspannungswert (UBvor) unterschreitet.

3. Verfahren nach Anspruch 1 oder 2 **dadurch gekennzeichnet, dass**
die erste elektrische Maschine (104) zur Spannungsstabilisierung des Bordnetzes (102) derart betrieben wird,
dass diese im Normalbetrieb mit einer vorgegebenen Freilaufdrehzahl (NF) betrieben wird
und dass diese im Kompensationsbetrieb motorisch betrieben wird, wenn die Bordnetzspannung (Ubist) einen vorgegebenen Bordnetzspannungswert (UBvor) überschreitet.

4. Verfahren nach Anspruch 2 oder 3 **dadurch gekennzeichnet, dass**
die erste elektrische Maschine (104) zur Spannungsstabilisierung des Bordnetzes (102) derart betrieben wird,
dass im Kompensationsbetrieb die generatorische Leistung so eingestellt wird,
dass ein erster unterer Spannungsgrenzwert (U1U) der Spannung des Bordnetzes (102) nicht unterschritten wird
und/ oder
dass im Kompensationsbetrieb die motorische Leistung so eingestellt wird, dass ein erster oberer Spannungsgrenzwert (U1O) der Spannung des Bordnetzes (102) nicht überschritten wird.

5. Verfahren nach Anspruch 1 **dadurch gekennzeichnet, dass**
der ersten elektrischen Maschine (104) die Freilaufsolldrehzahl (NF) in Abhängigkeit einer zu erwartenden Leistungsänderung (Pverbr) des Bordnetzes (102) vorgegeben wird.

6. Verfahren nach Anspruch 1 **dadurch gekennzeichnet, dass**
die erste elektrische Maschine (104) zur Spannungsstabilisierung des Bordnetzes (102) derart betrieben wird,
dass diese im Normalbetrieb als Lastwiderstand mit einem vorgegebenen Normalbetriebslastwiderstandswert (RN) betrieben wird
und dass im Kompensationsbetrieb der wirksame Lastwiderstandswert (R1ist) der ersten elektrischen Maschine (104) erhöht wird, wenn die Bordnetzspannung (Ubist) einen vorgegebenen Bordnetzspannungswert (UBvor) unterschreitet.

7. Verfahren nach Anspruch 1 **dadurch gekennzeichnet, dass**
die erste elektrische Maschine (104) zur Spannungsstabilisierung des Bordnetzes (102) derart betrieben wird,
dass diese im Normalbetrieb als Lastwiderstand mit einem vorgegebenen Normalbetriebslastwiderstandswert (RN) betrieben wird
und dass im Kompensationsbetrieb der wirksame Lastwiderstandswert (R1ist) der ersten elektrischen Maschine (104) reduziert wird, wenn die Bordnetzspannung (Ubist) einen vorgegebenen Bordnetzspannungswert (UBvor) überschreitet.

8. Verfahren nach Anspruch 6 oder 7 **dadurch gekennzeichnet, dass**
der Normalbetriebslastwiderstandswert (RN) der ersten elektrischen Maschine (104) in Abhängigkeit einer zu erwartenden Leistungsänderung (Pverbr) des Bordnetzes (102) vorgegeben wird.

9. Verfahren nach einem der vorhergehenden Ansprüche **dadurch gekennzeichnet, dass** der Antriebsstrang (101) weiter einen Verbrennungsmotor (106) und eine zweite elektrische Maschine (103) aufweist, und die zweite elektrische Maschine (103) an dem Bordnetz (102) angeschlossen ist,
wobei der Verbrennungsmotor (106) die zweite elektrische Maschine (103) antreibt, damit diese generatorisch elektrische Leistung zur Versorgung des Bordnetzes (102) erzeugt.

10. Verfahren nach Anspruch 9 **dadurch gekennzeichnet, dass**
in einem Betriebsmodus A zunächst die zweite elektrische Maschine (103) zur Spannungsstabilisierung des Bordnetzes eingesetzt wird und erst wenn die Bordnetzspannung (UBist) einen zweiten unteren Spannungsgrenzwert (U2U) unterschreitet oder einen zweiten oberen Spannungsgrenzwert (U2O) überschreitet in einem Betriebsmodus B die erste elektrische Maschine (104) zur Spannungsstabilisierung des Bordnetzes (102) betrieben wird.

11. Verfahren nach Anspruch 9 **dadurch gekennzeichnet, dass**
in einem Betriebsmodus C die zweite elektrische Maschine (103) zur Spannungsstabilisierung von Spannungsänderungen des Bordnetzes (102) eingesetzt wird, wobei diese Spannungsänderungen des Bordnetzes (102) eine Frequenz aufweisen, die einen ersten vorgegebenen Frequenzgrenzwert (F1) unterschreiten und
die erste elektrische Maschine (104) zur Spannungsstabilisierung von Spannungsänderungen des Bordnetzes (102) eingesetzt wird, wobei diese Spannungsänderungen des Bordnetzes (102) eine Frequenz aufweisen, die einen zweiten vorgegebenen Frequenzgrenzwert (F2) überschreiten.

12. Vorrichtung zum Betreiben eines Antriebsstrangs (101) eines Hybridfahrzeuges mit einem Bordnetz (102),
wobei der Antriebsstrang (101) mindestens ein Fahrzeugantriebsrad (105), eine erste elektrische Maschine (104) aufweist, und die erste elektrische Maschine (104) an dem Bordnetz (102) angeschlossen ist,
wobei Mittel (108) vorgesehen sind, die den Betrieb der Antriebsstrangkomponenten (102, 104) regeln,
**dadurch gekennzeichnet, dass**
eine Batterie (107) vorgesehen ist, die mit dem Bordnetz (102) verbindbar ist und.
in einem Hochvoltnormalbetrieb zur Spannungsstabilisierung des Bordnetzes (102) eingesetzt wird und in einem Ersatzbetrieb, wenn die Batterie (107) das Bordnetz (102) nicht mit einer vorgegebenen Energie versorgt, zur Spannungsstabilisierung des Bordnetzes (102) die erste elektrische Maschine (104) von den Antriebsrädern (105) des Hybridfahrzeuges abgekoppelt betrieben wird.

13. Vorrichtung nach Anspruch 12 zum Betrieb des Antriebsstrangs (101) eines Hybridfahrzeuges, **dadurch gekennzeichnet, dass**
der Antriebsstrang (101) eine Batterie (107) aufweist, die mit dem Bordnetz (102) verbindbar ist und in einem Normalbetrieb zur Spannungsstabilisierung des Bordnetzes (102) eingesetzt wird und wobei Mittel (108) vorgesehen sind, die den Betrieb der Antriebsstrangkomponenten (102-107, 109) derart regeln, dass in einem Ersatzbetrieb das Verfahren zum Betreiben eines Antriebsstrangs (101) eines Hybridfahrzeuges mit einem Bordnetz (102) nach den Ansprüchen 1-8 und 9 eingesetzt wird, wenn die Batterie (107) das Bordnetz (102) nicht mit einer vorgegebenen Energie versorgt.

14. Vorrichtung nach Anspruch 12 oder 13 zum Betrieb des Antriebsstrangs (101) eines Hybridfahrzeuges, **dadurch gekennzeichnet, dass**
ein DC/DC Wandler (109) vorgesehen ist, der zur Kopplung des Bordnetzes (102) mit einem zweiten Bordnetz (110) dient, wobei das zweite Bordnetz (110) bei einer anderen Spannung betrieben wird als das Bordnetz (102), insbesondere bei einer niedrigeren Spannung als das Bordnetz (102),
und wobei das zweite Bordnetz (110) mittels des DC/DC Wandlers (109) mit Energie aus dem Bordnetz (102) versorgt wird.

## Claims

1. Method for operating a drive train (101) of a hybrid vehicle comprising an on-board electrical system (102),
wherein the drive train (101) has at least one vehicle driven wheel (105) and a first electric machine (104) for driving the at least one vehicle driven wheel, and the first electric machine (104) is connected to the on-board electrical system (102), **characterized in that** a battery (107) is provided which can be connected to the on-board electrical system (102), and in a high voltage normal operating mode is used to stabilize the voltage of the on-board electrical system (102), and in a backup operating mode, if the battery (107) does not supply the on-board electrical system (102) with a predefined level of energy, in order to stabilize the voltage of the on-board electrical system (102), the first electric machine (104) is operated disconnected from the at least one vehicle driven wheel (105) of the hybrid vehicle.

2. Method according to Claim 1, **characterized in that**
in order to stabilize the voltage of the on-board electrical system (102) the first electric machine (104) is operated in such a way
that in the normal operating mode said electric machine (104) is operated with a predefined freewheeling rotational speed (NF),
and **in that** in the compensation operating mode said electric machine (104) is operated as a generator if the on-board electrical system voltage (Ubact) undershoots a predefined on-board electrical system voltage value (UBpre).

3. Method according to Claim 1 or 2, **characterized**
**in that**
in order to stabilize the voltage of the on-board electrical system (102) the first electric machine (104) is operated in such a way
that in the normal operating mode said electric machine (104) is operated with a predefined freewheeling rotational speed (NF),
and **in that** in the compensation operating mode said electric machine (104) is operated as a motor if the on-board electrical system voltage (Ubact) exceeds a predefined on-board electrical system voltage value (UBpre).

4. Method according to Claim 2 or 3, **characterized**
**in that**
in order to stabilize the voltage of the on-board electrical system (102) the first electric machine (104) is operated in such a way
that in the compensation operating mode the generator power is set in such a way that a first lower voltage limiting value (U1U) of the voltage of the on-board electrical system (102) is not undershot
and/or
**in that** in the compensation operating mode the motor power is set in such a way that a first upper voltage limiting value (U1O) of the voltage of the on-board electrical system (102) is not exceeded.

5. Method according to Claim 1, **characterized in that**
the freewheeling setpoint rotational speed (NF) is predefined for the first electric machine (104) as a function of an expected change in power (Pload) of the on-board electrical system (102).

6. Method according to Claim 1, **characterized in that**
in order to stabilize the voltage of the on-board electrical system (102) the first electric machine (104) is operated in such a way
that in the normal operating mode said electric machine (104) is operated as a load resistance with a predefined normal operating mode load resistance value (RN),
and **in that** in the compensation operating mode the effective load resistance value (R1act) of the first electric machine (104) is increased if the on-board electrical system voltage (Ubact) undershoots a predefined on-board electrical system voltage value (UBpre).

7. Method according to Claim 1, **characterized in that**
in order to stabilize the voltage of the on-board electrical system (102) the first electric machine (104) is operated in such a way
that in the normal operating mode said electric machine (104) is operated as a load resistance with a predefined normal operating mode load resistance value (RN),
and **in that** in the compensation operating mode the effective load resistance value (R1act) of the first electric machine (104) is reduced if the on-board electrical system voltage (Ubact) exceeds a predefined on-board electrical system voltage value (UBpre).

8. Method according to Claim 6 or 7, **characterized in that**
the normal operating mode load resistance value (RN) of the first electric machine (104) is predefined as a function of an expected change in power (Pload) of the on-board electrical system (102).

9. Method according to one of the preceding claims, **characterized in that** the drive train (101) also has an internal combustion engine (106) and a second electric machine (103), and the second electric machine (103) is connected to the on-board electrical system (102), wherein the internal combustion engine (106) drives the second electric machine (103) so that the latter generates electrical power in a generator mode in order to supply the on-board electrical system (102).

10. Method according to Claim 9, **characterized in that** in an operating mode A the second electric machine (103) is firstly used to stabilize the voltage of the on-board electrical system, and the first electric machine (104) is operated in an operating mode B in order to stabilize the voltage of the on-board electrical system (102) only if the on-board electrical system voltage (UBact) undershoots a second lower voltage limiting value (U2U) or exceeds a second upper voltage limiting value (U2O).

11. Method according to Claim 9, **characterized in that** in an operating mode C the second electric machine (103) is used to stabilize changes in voltage of the on-board electrical system (102), wherein these changes in voltage of the on-board electrical system (102) have a frequency which undershoots a first predefined frequency limiting value (F1), and
the first electric machine (104) is used to stabilize changes in voltage of the on-board electrical system (102), wherein these changes in voltage of the on-board electrical system (102) have a frequency which exceeds a second predefined frequency limiting value (F2).

12. Device for operating a drive train (101) of a hybrid vehicle having an on-board electrical system (102),
wherein the drive train (101) has at least one vehicle driven wheel (105) and a first electric machine (104), and the first electric machine (104) is connected to the on-board electrical system (102),
wherein means (108) are provided which perform closed-loop control of the operation of the drive train components (102, 104),
**characterized in that**
a battery (107) is provided which can be connected to the on-board electrical system (102), and in a high voltage normal operating mode is used to stabilize the voltage of the on-board electrical system (102), and in a backup operating mode, if the battery (107) does not supply the on-board electrical system (102) with a predefined level of energy, in order to stabilize the voltage of the on-board electrical system (102) the first electric machine (104) is operated decoupled from the driven wheels (105) of the hybrid vehicle.

13. Device according to Claim 12 for operating the drive train (101) of a hybrid vehicle, **characterized in that**
the drive train (101) has a battery (107) which can be connected to the on-board electrical system (102), and in a normal operating mode is used to stabilize the voltage of the on-board electrical system (102), and wherein means (108) are provided which perform closed-loop control of the operation of the drive train components (102-107, 109) in such a way that in a backup operating mode the method is used to operate a drive train (101) of a hybrid vehicle having an on-board electrical system (102) according to claims 1-8 and 9 if the battery (107) does not supply the on-board electrical system (102) with a predefined level of energy.

14. Device according to Claim 12 or 13 for operating the drive train (101) of a hybrid vehicle,
**characterized in that**
a DC/DC converter (109) is provided which serves to couple the on-board electrical system (102) to a second on-board electrical system (110), wherein the second on-board electrical system (110) is operated at a different voltage than the on-board electrical system (102), in particular at a lower voltage than the on-board electrical system (102),
and wherein the second on-board electrical system (110) is supplied with energy from the on-board electrical system (102) by means of the DC/DC converter (109).

## Revendications

1. Procédé pour faire fonctionner une chaîne cinématique (101) d'un véhicule hybride pourvu d'un réseau de bord (102),
la chaîne cinématique (101) possédant au moins une roue motrice de véhicule (105) ainsi qu'une première machine électrique (104) destinée à entraîner l'au moins une roue motrice de véhicule, et la première machine électrique (104) étant raccordée au réseau de bord (102), **caractérisé en ce qu'**il existe une batterie (107) qui peut être reliée au réseau de bord (102) et utilisée dans un mode normal à haute tension pour la stabilisation de la tension du réseau de bord (102) et, dans un mode de substitution, lorsque la batterie (107) n'alimente pas le réseau de bord (102) avec une énergie prédéfinie, pour la stabilisation de la tension du réseau de bord (102), la première machine électrique (104) fonctionne en étant désaccouplée de l'au moins une roue motrice de véhicule (105) du véhicule hybride.

2. Procédé selon la revendication 1, **caractérisé en ce que** la première machine électrique (104), pour la stabilisation de la tension du réseau de bord (102), fonctionne de telle sorte qu'en mode normal, celle-ci fonctionne avec une vitesse de rotation de roue libre (NF) prédéfinie et **en ce qu'**en mode de compensation, celle-ci fonctionne en tant que générateur lorsque la tension du réseau de bord (Ubist) devient inférieure à une valeur de tension du réseau de bord prédéfinie (UBvor).

3. Procédé selon la revendication 1 ou 2, **caractérisé en ce que** la première machine électrique (104), pour la stabilisation de la tension du réseau de bord (102), fonctionne de telle sorte qu'en mode normal, celle-ci fonctionne avec une vitesse de rotation de roue libre (NF) prédéfinie et **en ce qu'**en mode de compensation, celle-ci fonctionne en tant que moteur lorsque la tension du réseau de bord (Ubist) devient supérieure à une valeur de tension du réseau de bord prédéfinie (UBvor).

4. Procédé selon la revendication 2 ou 3, **caractérisé en ce que** la première machine électrique (104), pour la stabilisation de la tension du réseau de bord (102), fonctionne de telle sorte qu'en mode de compensation, la puissance de générateur est réglée de telle sorte que la tension du réseau de bord (102) ne devient pas inférieure à une première valeur limite de tension basse (U1U) et/ou qu'en mode de compensation, la puissance de moteur est réglée de telle sorte que la tension du réseau de bord (102) ne devient pas supérieure à une première valeur limite de tension haute (U1O).

5. Procédé selon la revendication 1, **caractérisé en ce que** la vitesse de rotation de roue libre (NF) est prédéfinie pour première machine électrique (104) e fonction d'une variation de puissance (Pverbr) attendue du réseau de bord (102).

6. Procédé selon la revendication 1, **caractérisé en ce que** la première machine électrique (104), pour la stabilisation de la tension du réseau de bord (102), fonctionne de telle sorte qu'en mode normal, celle-ci fonctionne en tant que résistance de charge avec une valeur de résistance de charge de fonctionnement normal (RN) prédéfinie et **en ce qu'**en mode de compensation, la valeur de la résistance de charge active (R1ist) de la machine électrique (104) est augmentée lorsque la tension du réseau de bord (Ubist) devient inférieure à une valeur de tension du réseau de bord prédéfinie (UBvor).

7. Procédé selon la revendication 1, **caractérisé en ce que** la première machine électrique (104), pour la stabilisation de la tension du réseau de bord (102), fonctionne de telle sorte qu'en mode normal, celle-ci fonctionne en tant que résistance de charge avec une valeur de résistance de charge de fonctionnement normal (RN) prédéfinie et **en ce qu'**en mode de compensation, la valeur de la résistance de charge active (R1ist) de la machine électrique (104) est réduite lorsque la tension du réseau de bord (Ubist) devient supérieure à une valeur de tension du réseau de bord prédéfinie (UBvor).

8. Procédé selon la revendication 6 ou 7, **caractérisé en ce que** la valeur de résistance de charge de fonctionnement normal (RN) de la première machine électrique (104) est prédéfinie en fonction d'une variation de puissance (Pverbr) attendue du réseau de bord (102).

9. Procédé selon l'une des revendications précédentes, **caractérisé en ce que** la chaîne cinématique (101) possède en outre un moteur à combustion interne (106) et une deuxième machine électrique (103), et la deuxième machine électrique (103) est raccordée au réseau de bord (102), le moteur à combustion interne (106) entraînant la deuxième machine électrique (103) afin que celle-ci génère de la puissance électrique de générateur pour l'alimentation du réseau de bord (102).

10. Procédé selon la revendication 9, **caractérisé en ce que** dans un mode de fonctionnement A, la deuxième machine électrique (103) est utilisée en premier pour la stabilisation de la tension du réseau de bord, et la première machine électrique (104) n'entre en fonctionnement pour la stabilisation de la tension du réseau de bord (102) dans un mode de fonctionnement B que lorsque la tension du réseau de bord (UBist) devient inférieure à une deuxième valeur limite de tension basse (U2U) ou devient supérieure à une deuxième valeur limite de tension haute (U2O).

11. Procédé selon la revendication 9, **caractérisé en ce que** dans un mode de fonctionnement C, la deuxième machine électrique (103) est utilisée pour la stabilisation de la tension en présence de variations de la tension du réseau de bord (102), ces variations de la tension du réseau de bord (102) présentant une fréquence qui est inférieure à une première valeur limite de fréquence (F1) prédéfinie et la première machine électrique (104) est utilisée pour la stabilisation de la tension en présence de variations de la tension du réseau de bord (102), ces variations de la tension du réseau de bord (102) présentant une fréquence qui est supérieure à une deuxième valeur limite de fréquence (F2) prédéfinie.

12. Dispositif pour faire fonctionner une chaîne cinématique (101) d'un véhicule hybride pourvu d'un réseau de bord (102),
la chaîne cinématique (101) possédant au moins une roue motrice de véhicule (105) et une première machine électrique (104), la première machine électrique (104) étant raccordée au réseau de bord (102),
des moyens (108) étant présents qui régulent le fonctionnement des composants de la chaîne cinématique (102, 104),
**caractérisé en ce**
**qu'**il existe une batterie (107) qui peut être reliée au réseau de bord (102) et utilisée dans un mode normal à haute tension pour la stabilisation de la tension du réseau de bord (102) et, dans un mode de substitution, lorsque la batterie (107) n'alimente pas le réseau de bord (102) avec une énergie prédéfinie, pour la stabilisation de la tension du réseau de bord (102), la première machine électrique (104) fonctionne en étant désaccouplée des roues motrices (105) du véhicule hybride.

13. Dispositif selon la revendication 12 pour faire fonctionner une chaîne cinématique (101) d'un véhicule hybride, **caractérisé en ce que** la chaîne cinématique (101) possède une batterie (107) qui peut être reliée au réseau de bord (102) et utilisée dans un mode normal pour la stabilisation de la tension du réseau de bord (102), et des moyens (108) étant présents, lesquels régulent le fonctionnement des composants de la chaîne cinématique (102-107, 109) de telle sorte que dans un mode de substitution, le procédé pour faire fonctionner une chaîne cinématique (101) d'un véhicule hybride selon l'une des revendications 1 à 8 et 9 est mise en oeuvre lorsque la batterie (107) n'alimente pas le réseau de bord (102) avec une énergie prédéfinie.

14. Dispositif selon la revendication 12 ou 13 pour faire fonctionner une chaîne cinématique (101) d'un véhicule hybride, **caractérisé en ce qu'**il existe un convertisseur CC/CC (109) qui sert à la connexion du réseau de bord (102) avec un deuxième réseau de bord (110), le deuxième réseau de bord (110) fonctionnant à une autre tension que le réseau de bord (102), notamment à une tension plus basse que le réseau de bord (102), et le deuxième réseau de bord (110) étant alimenté en énergie depuis le réseau de bord (102) au moyen du convertisseur CC/CC (109).
